## Europäisches Patentamt
## European Patent Office
## Office européen des brevets

(19)

(11) Veröffentlichungsnummer: **0 113 480**
**B1**

(12) **EUROPÄISCHE PATENTSCHRIFT**

(45) Veröffentlichungstag der Patentschrift:
**27.08.86**

(51) Int. Cl.⁴: **B 23 P 5/00**

(21) Anmeldenummer: **83113096.8**

(22) Anmeldetag: **24.12.83**

(54) Verfahren und Vorrichtung zur Herstellung von Schneidelementen, insbesondere für Tiefbohrmeissel.

(30) Priorität: **07.01.83 DE 3300357**

(43) Veröffentlichungstag der Anmeldung:
**18.07.84 Patentblatt 84/29**

(45) Bekanntmachung des Hinweises auf die Patenterteilung:
**27.08.86 Patentblatt 86/35**

(84) Benannte Vertragsstaaten:
**BE DE FR GB NL**

(56) Entgegenhaltungen:
**AT - B - 153 156**
**FR - A - 2 440 245**
**GB - A - 1 565 597**
**US - A - 2 025 368**
**US - A - 3 745 623**
**US - A - 4 250 610**

(73) Patentinhaber: **Norton Christensen, Inc., 365 Bugatti Street, Salt Lake City Utah 84126 (US)**

(72) Erfinder: **Illerhaus, Roland, Danziger Strasse 2, D-3101 Ahnsbeck (DE)**
Erfinder: **Jürgens, Rainer, Dr.-Ing., Osterloher Landstrasse 20, D-3100 Osterloh (DE)**

(74) Vertreter: **Busse & Busse Patentanwälte, Postfach 1226, D-4500 Osnabrück (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft ein Verfahren zur Herstellung von in Metallmatrixmasse eingebundenes Diamantmaterial umfassenden Schneidelementen, insbesondere für Tiefbohrmeissel, gemäss dem Oberbegriff des Anspruchs 1.

Bei der Herstellung von Schneidelementen, die in Metallmatrixmasse eingebundenes Diamantmaterial umfassen, wird eine innige Anbindung des Diamantmaterials an die als Träger dienende Matrixmasse angestrebt. Diese Anbindung soll sicherstellen, dass das Diamantmaterial auch unter dem Einfluss von beim Schneidvorgang auftretenden schockartigen Scherkräften in seinem Träger verbleibt. Grundsätzlich lässt sich eine Anbindung zwischen zwei Materialien durch einen bei erhöhter Temperatur ablaufenden Diffusionsvorgang erzielen, wobei in einem Randbereich ein gegenseitiges Durchdringen der Materialien stattfindet und so eine Bindungszone schafft. Da Diamant aber unter Atmosphärendruck bei derartigen Temperaturen instabil ist, muss zur erfolgreichen Durchführung des Diffusionsvorgangs neben der Temperaturerhöhung auch eine Druckerhöhung erfolgen.

Durch die US-PS 3 745 623 ist bereits ein Verfahren zur Herstellung von Schneidelementen durch Heisspressen bekannt. Hier wird zunächst eine Ausgangspulvermischung in eine mit einer Metallauskleidung versehene Einsenkung eines Formblocks eingebracht, die Öffnung dann mit einem Deckblech verschlossen und auf den Formblock ein Kopfstück aus gleichem Material aufgelegt. Diese Anordnung wird gegebenenfalls kaskadiert in einen Hochdruckofen eingebracht und dort bei erhöhter Temperatur und erhöhtem Druck gesintert, wobei der Druck in nur einer Richtungskomponente aufgeprägt wird. Nach Abkühlung und Absenken des Druckes lassen sich die Schneidelemente den Ausnehmungen der Formblöcke entnehmen.

Es hat sich gezeigt, dass die als hermetischer Abschluss für die Ausgangspulvermischung während des Sintervorgangs dienende Metallauskleidung eine nur relativ einfache geometrische Formgebung der Einsenkungen gestattet, ohne aufgrund extremer Verformwege bei der Anlegung an die Wände der Einsenkungen selbst Schaden zu nehmen. Darüber hinaus führt ein gerichteter Druckaufbau während des Sintervorgangs nach Abkühlung zu Materialspannungen im Inneren der Schneidelemente, die bei späterer Scherbelastung eine vorzeitige Zerstörung herbeiführen können. Die der Erfindung zugrundeliegende Aufgabe besteht deshalb darin, bei verbesserten Formgestaltungsmöglichkeiten die Zuverlässigkeit des Herstellungsverfahrens zu erhalten und die Festigkeitseigenschaften der fertigen Schneidelemente zu verbessern.

Diese Aufgabe wird bei einem Verfahren nach dem Oberbegriff des Patentanspruchs 1 durch die im Kennzeichen angegebenen Merkmale gelöst.

Nach dem erfindungsgemässen Verfahren lassen sich Schneidelemente in beliebigen komplizierten Raumformen herstellen, da die hermetische Kapsel nicht mehr selbst der Raumform angepasst wird, sondern lediglich die Aussenfläche des Formkörpers umkleidet. Durch die isostatische Druckaufprägung ergibt sich ferner eine isotrope Struktur, die sich günstig auf die Standfestigkeit der Bindung zwischen den Materialien bei Auftreten grosser Scherkräfte erweist. Weitere Merkmale von Ausführungsarten sind in den Patentansprüchen 2 bis 6 angegeben.

Die Erfindung betrifft ferner einen Formblock zur Herstellung von in Metallmatrixmasse eingebundenes Diamantmaterial umfassenden Schneidelementen in einer Ausführung nach dem Oberbegriff des Anspruchs 7. Diesbezüglich liegt der Erfindung die Aufgabe zugrunde, einen Formblock zu schaffen, der die Herstellung beliebiger geometrischer Raumformen ermöglicht und darüber hinaus eine ausgeglichenere Druckaufprägung gestattet.

Diese Aufgabe löst der Formblock nach der Erfindung durch die kennzeichnenden Merkmale des Anspruchs 7. Eine Weiterbildung ist in dem Anspruch 8 angegeben.

Die Erfindung wird nun anhand zweier Ausführungsbeispiele, die in der Zeichnung dargestellt sind, erläutert. In der Zeichnung zeigen:

Fig. 1 eine Vorrichtung zur Herstellung einfacher Schneidelemente als räumliche Schnittzeichnung,

Fig. 2 eine Vorrichtung zur Herstellung eines Schneidelements in Form eines Meisselkopfes.

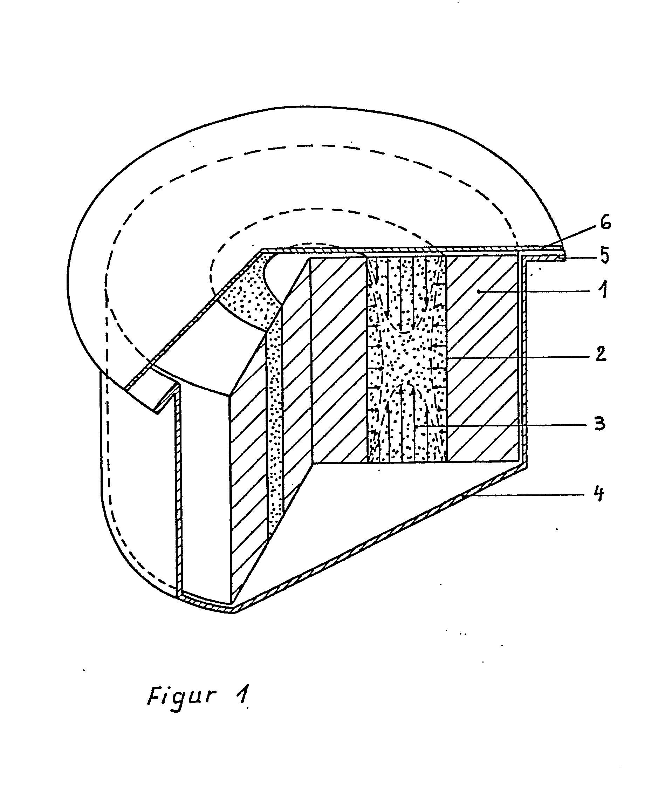

Die in Fig. 1 dargestellte Vorrichtung umfasst einen Formblock 1 aus Graphit, in den eine J-förmige Ausnehmung 2 eingelassen ist. In diese Ausnehmung wird während des Herstellungsverfahrens die Ausgangspulvermischung 3 eingefüllt, bis sie mit der oberen Fläche abschliesst. Die Vorrichtung umfasst ferner eine Kapsel, bestehend aus einem dünnwandigen Topf 4, der an seinem oberen Ende in einen Kragen 5 ausläuft. Der Topf 4 ist mit einem Deckel 6 hermetisch verschliessbar, indem nach Einfüllen der Ausgangspulvermischung der Kragen 5 mit dem Deckel 6 umgebördelt, verschweisst oder verlötet wird. In der Schnittebene des Formblocks 1 sind ferner durch Pfeile die Druckkegel angedeutet, die sich bei isostatischer Druckaufprägung auf den Formblock 1 innerhalb der Ausgangspulvermischung 3 ausbilden.

Der Sintervorgang erfolgt in einem hier nicht dargestellten Hochdruckofen, der eine Heizvorrichtung und eine Druckkammer umfasst, in die ein flüssiges oder gasförmiges Arbeitsmedium mit hohem Druck eingepresst wird.

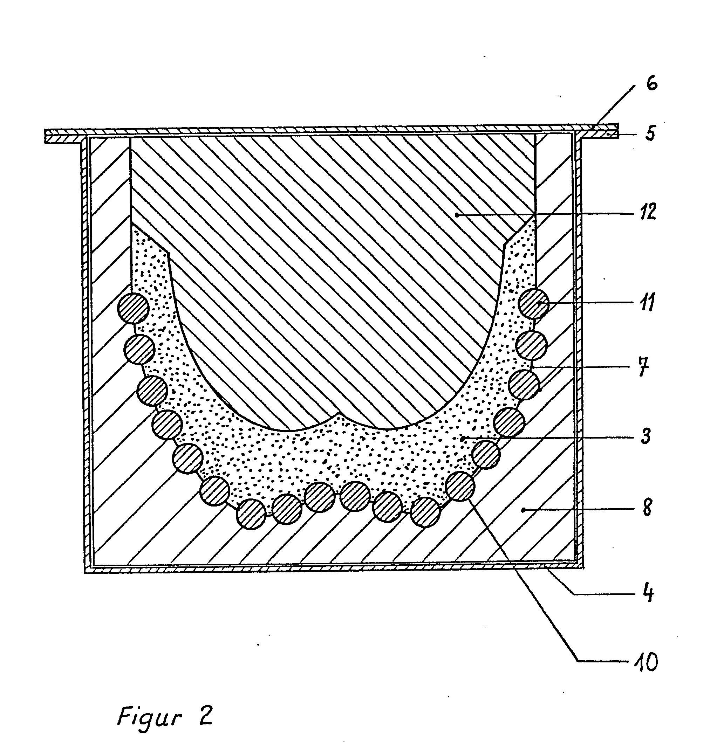

In die Ausnehmung 7 des in Fig. 2 dargestellten Formblocks 8 sind bereits Vertiefungen 10 eingeformt, in die vor Einfüllen der Pulvermischung 3 Sinterdiamantkörper 11 eingelegt werden. Auf die Pulvermischung 3 wird schliesslich ein metallisches Werkzeuganschlussstück 12 aufgesetzt, mit dem beim Sintervorgang die Pulvermischung 3 ebenfalls eine stabile Anbindung eingeht. Die Ausführung des dünnwandigen Topfes 4 und de Deckels 6 ist vergleichbar mit derjenigen in Fig. 1.

Wie die Ausführungsbeispiele zeigen, lassen sich die Töpfe 4 und Deckel 6 zur Umkleidung der Formblöcke 1 bzw. 8 bereits seriell vorfertigen, unabhängig davon, wie die spätere Ausnehmung 2 bzw. 7 in ihrer Form gestaltet wird.

Sofern die Schneidelemente ohne Zerstörung des Formblocks nach oben herausgezogen werden können, lassen sich die Formblöcke auch mehrmals wiederverwenden, so dass lediglich die einfach herzustellende dünnwandige Umkleidung ersetzt werden muss. Eine Zerstörung des Formblocks lässt sich in vielen Fällen vermeiden, da sich bei Aufhebung des Formdruckes der Formraum spaltbildend erweitert, so dass das oder die Schneidglieder, insbesondere bei einfachen geometrischen Formen, ohne weiteres dem Formblock entnommen werden können.

**Patentansprüche**

1. Verfahren zur Herstellung von in Metallmatrixmasse eingebundenes Diamantmaterial umfassenden Schneidelementen, insbesondere für Tiefbohrmeissel, durch Heisspressen einer in eine Ausnehmung (2; 7) eines Formblocks (1; 8) eingefüllten und hermetisch umkapselten Ausgangspulvermischung (3) in einem Hochdruckofen, dadurch gekennzeichnet, dass die Ausgangspulvermischung zunächst direkt in die Ausnehmung (2; 7) eingefüllt wird, der Formblock (1; 8) sodann als Ganzes umkapselt und in einen Hochdruckofen eingebracht wird, in dem in an sich bekannter Weise der Druck auf den Formblock über ein flüssiges oder gasförmiges Druckmedium aufgebracht wird, und dass schliesslich nach Abkühlung und Druckabsenkung die Kapsel (4; 6) entfernt und die fertigen Schneidelemente der Ausnehmung entnommen werden.

2. Verfahren nach Anspruch 1, dadurch gekennzeichnet, dass der Formblock (1; 8) auf eine Sintertemperatur im Bereich von etwa 800 bis 1000°C erwärmt wird und die Temperatur über einen vorgegebenen Zeitraum konstant gehalten wird.

3. Verfahren nach Anspruch 1 oder 2, dadurch gekennzeichnet, dass der Formblock einem Druck im Bereich von etwa 1 bis 3 kbar ausgesetzt wird.

4. Verfahren nach einem oder mehreren der Ansprüche 1 bis 3, dadurch gekennzeichnet, dass der Formblock mit einer mehrteiligen Kapsel vollständig und enganliegend umgeben wird und die Teile der Kapsel untereinander verlötet, verschweisst oder umgebördelt werden.

5. Verfahren nach einem oder mehreren der Ansprüche 1 bis 4, dadurch gekennzeichnet, dass vor Einfüllen der Ausgangspulvermischung grobkörnige Diamanten und/oder polykristalline Sinterdiamantkörper (11) in Vertiefungen (10) in der Ausnehmung (7) des Formblocks (8) gelegt werden.

6. Verfahren nach einem oder mehreren der Ansprüche 1 bis 5, dadurch gekennzeichnet, dass auf die Ausgangspulvermischung ein Werkzeuganschlussstück (12) aufgesetzt wird.

7. Formblock zur Herstellung von in Metallmatrixmasse eingebundenes Diamantmaterial umfassenden Schneidelementen, insbesondere für Tiefbohrmeissel, durch Heisspressen in einem Hochdruckofen, dadurch gekennzeichnet, dass der Formblock (1) mit einer Kapsel (4, 6) aus dünnwandigem, nachgiebigem, und temperaturbeständigem Material hermetisch umschlossen ist.

8. Formblock nach Anspruch 7, dadurch gekennzeichnet, dass der Formblock (1) aus Graphit besteht und die Kapsel (4, 6) aus einem zweiteiligen, dem Formblock angepassten Blechkörper gebildet ist.

**Claims**

1. A process for the manufacture of cutting elements comprising diamond material bound in a metal matrix material, especially for well drilling bits, by hot-pressing a hermetically enclosed starting powder mixture (3) introduced into a recess (2, 7) in a mould block (1, 8) in a high-pressure furnace, characterised in that the starting powder mixture is first introduced directly into the recess (2, 7), the mould block (1, 8) is then enclosed as a whole and introduced into a high-pressure furnace in which the pressure is applied to the mould block through a liquid or gaseous pressure medium in a manner known per se, and that finally, after cooling and pressure reduction, the casings (4, 6) are removed and the finished cutting elements are removed from the recess.

2. A process as claimed in claim 1, characterised in that the mould block (1, 8) is heated to a sintering temperature in the range from about 800 to 1000°C and the temperature is kept constant over a preset period of time.

3. A process as claimed in claim 1 or 2, characterised in that the mould block is exposed to a pressure in the region of about 1 to 3 kbar.

4. A process as claimed in any one of claims 1 to 3, characterised in that the mould block is completely surrounded by a close-fitting multi-part casing and the parts of the casing are soldered, welded or beaded over together.

5. A process as claimed in any one of claims 1 to 4, characterised in that before the introduction of the starting powder mixture, coarse-grained diamonds and/or polycrystalline sintered diamond bodies (11) are placed in depressions (10) in the recess (7) in the mould block (8).

6. A process as claimed in any one of claims 1 to 5, characterised in that a tool connecting member (12) is placed on the starting powder mixture.

7. A mould block for the manufacture of cutting elements comprising diamond material bound in a metal matrix material, especially for well drilling bits, by hot-pressing in a high-pressure furnace, characterised in that the mould block (1) is hermetically enclosed by a casing (4, 6) of thin-walled, flexible and temperature-resistant material.

8. A mould block as claimed in claim 7, characterised in that the mould block (1) consists of graphite and the casing (4, 6) is formed from a two part sheet-metal member adapted to the mould block.

**Revendications**

1. Procédé pour fabriquer des éléments de coupe comprenant une matière diamantine incorporée dans une masse matricielle de métal, en particulier pour des trépans de forage profond, par pressage à chaud d'un mélange de poudres de départ (3) introduit dans une cavité (2, 7) d'un bloc de moulage (1, 8) et scellé hermétiquement par une enveloppe, dans un four à haute pression, caractérisé en ce que le mélange de poudres de départ est tout d'abord introduit directement dans la cavité (2, 7), puis le bloc de moulage (1, 8) est garni entièrement d'une enveloppe et est introduit dans un four à haute pression, dans lequel, d'une manière bien connue, la pression est exercée sur le bloc de moulage par l'intermédiaire d'un agent liquide ou gazeux sous pressions, et finalement, après refroidissement et suppression de la pression, l'enveloppe (4, 6) est enlevée et les éléments de coupe terminés sont retirés de la cavité.

2. Procédé suivant la revendication 1, caractérisé en ce que le bloc de moulage (1, 8) est chauffé à une température de frittage de l'ordre de 800 à 1000°C environ et la température est maintenue constante pendant une période prédéfinie.

3. Procédé suivant la revendication 1 ou 2, caractérisé en ce que le bloc de moulage est soumis à une pression de l'ordre de 1 à 3 kbars.

4. Procédé suivant l'une quelconque des revendications 1 à 3, caractérisé en ce que le bloc de moulage est entouré complètement par une enveloppe en plusieurs parties qui épouse ses formes et les parties de l'enveloppe sont brasées, soudées ou assemblées par agrafage.

5. Procédé suivant l'une quelconque des revendications 1 à 4, caractérisé en ce qu'avant l'introduction du mélange de poudres de départ, des diamants et/ou des corps diamantins frittés polycristallins à gros grains sont placés dans des alvéoles (10) dans la cavité (7) du bloc de moulage (8).

6. Procédé suivant l'une quelconque des revendications 1 à 5, caractérisé en ce qu'une pièce de raccordement à un outil (12) est placée sur le mélange de poudres de départ.

7. Bloc de moulage pour fabriquer des éléments de coupe comprenant une matière diamantine incorporée dans une masse matricielle de métal, en particulier pour trépans de forage profond, par pressage à chaud dans un four à haute pression, caractérisé en ce qu'il (1) est entouré hermétiquement par une enveloppe (4, 6) en matière hermétique mince, flexible et insensible aux variations de température.

8. Bloc de moulage suivant la revendication 7, caractérisé en ce qu'il (1) est fabriqué en graphite et l'enveloppe (4, 6) est formée d'un corps en tôle en deux parties adapté au bloc de moulage.

Figur 1

Figur 2